# EUROPEAN PATENT APPLICATION

(11) **EP 0 761 419 A1**
(43) Date of publication of application: **12.03.1997**
(21) Application number: 96306205.4
(22) Date of filing: 27.08.1996
(51) Int. Cl.: B29C 70/68, A63B 53/10

(54) **Shaft**

(30) Priority: 28.08.1995 US 520053; 14.12.1995 US 572628
(71) Applicant: Soong, Tsai Chen, Penfield New York 14526 (US)
(72) Inventor: Soong, Tsai Chen, Penfield New York 14526 (US)
(74) Representative: Ablewhite, Alan James

(57) **Abstract**

An article of manufacture comprising a shaft having a handle end (41) and a head end (42), the shaft including a first tubular element (75) which is torsionally rigid, rotationally anisotropic along at least a portion of its length and is maintained in a twisted condition in the direction of greater torsional rigidity, thereby defining a first twisted segment, and the shaft further including a second tubular element (76), adjacent and generally coaxial to said first tubular element, which is torsionally rigid, rotationally anisotropic along at least a portion of its length and is maintained in a twisted condition, thereby defining a second twisted segment, wherein the twist of the second twisted segment is along its direction of greater torsional rigidity which is the direction opposite to the twist of said first twisted segment.

## Description

### BACKGROUND OF THE INVENTION

The present invention is directed to sports equipment having a shaft, one end used as a handle and the other end being connected to a head for striking a ball, such as a golf club. The golf club is known to have a control problem related to the twist of the shaft caused by impact of a ball on the head which is eccentrically connected to the shaft. Due to the eccentricity, the face of the head will rotate an angle about the longitudinal axis of the shaft following the impact. This twist of the head will cause the ball to fly away at an erroneous direction. The invention is to improve the torsional rigidity of the shaft, reducing the undesirable twist.

### DESCRIPTION OF THE DRAWINGS

For the purpose of illustration, there is shown in the drawings embodiments which are presently preferred:

FIG. 1 shows a conventional golf club.

FIG. 2 is the front view of a poised golf club.

FIG. 3 is the side view of Fig. 2.

FIG. 4 shows a piece of unidirectional, reinforcing fiber/resin filament tape clockwisely winding downward around a shaft.

FIG. 5 shows a shaft having two pretwisted, tubular elements with oppositely oriented fiber/resin filament tape windings.

FIG.6 shows the Fig. 5 shaft having a third tubular element, which is rotationally isotropic.

### DETAILED DESCRIPTION OF THE INVENTION

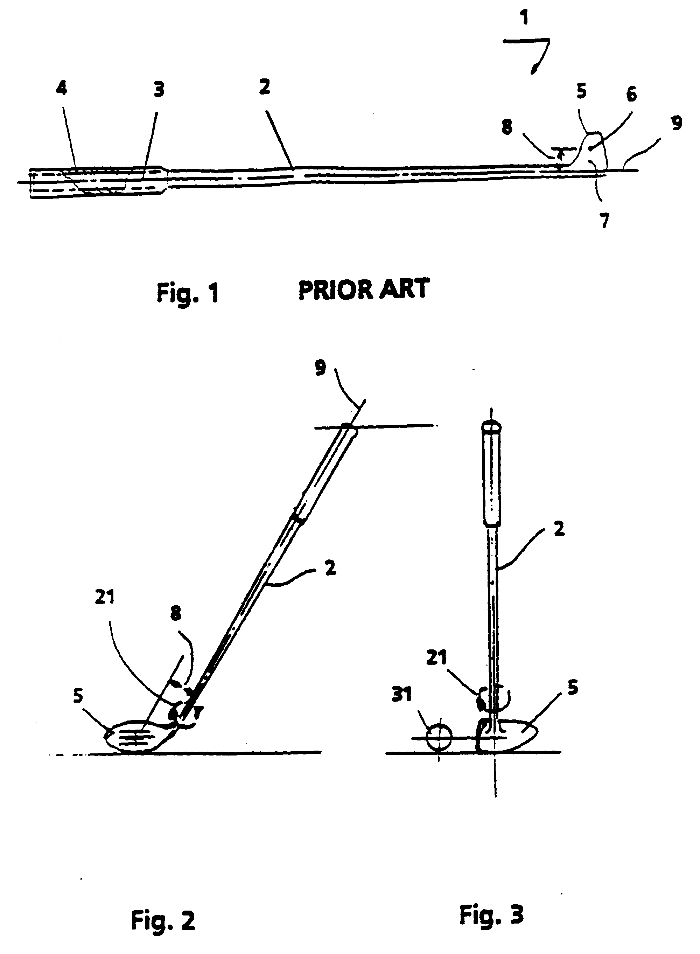

A golf club is used as example to illustrate the theory and preferred embodiments of the invention. The golf club shaft is a hollow tube, made of steel or reinforced fiber/resin composite material. Fibers may be metal, glass, carbon or other strong filamentary materials. Resin may be epoxy or other polymer chemical agents. Fig. 1 shows a golf club 1 comprising a shaft 2 which comprises a handle portion 3, having a grip 4, and a head 5. The centre point 6 of the head has an eccentricity 8 which is at a distance from the axis 9 of the shaft.

Fig. 2 and its side view Fig. 3 show the front and side views of a poised golf club facing a ball 31 before impact. The impact force on the head will create a clockwise twisting torque 21 about the shaft axis 9, as viewed from the top end of the handle, which is assumed firmly held, down towards the head end which can rotate upon impact. The purpose of the invention is to increase the torsional rigidity of the shaft. Or, to design an anti-twist shaft. Torsional rigidity of a shaft is defined as the torque required to twist a shaft of a unit angle of a unit length. A shaft is said to be torsionally anisotropic when its torsional rigidity from a clockwise end twist is different from a counterclockwise end twist. A linear torsional rigidity is that the torque is proportional to the twist angle. A nonlinear torsional rigidity is defined as the required torque increases geometrically or exponentially with increase of the twist angle.

A conventional steel or composite shaft are torsionally isotropic which is required by the rules of golf. Composite isotropic shaft has multiple filamentary layers, its fibers are 0°, 90°, or one layer of positively oriented unidirectional filament tape, followed by an equal, but negatively oriented tape. It is put on layer by layer alternately, forming a seamless sleeve, and finally cured in an oven.

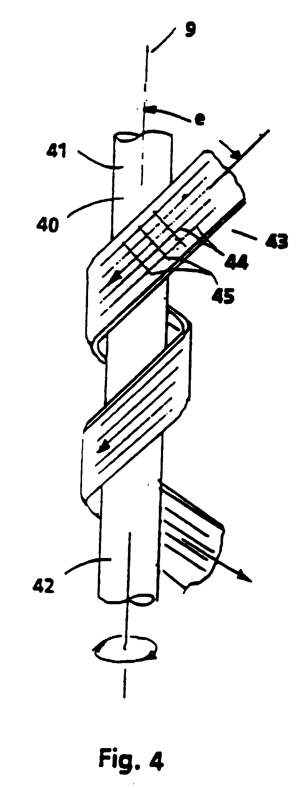

Fig. 4 shows a length of the core of a shaft covered by an anisotropic, spiral winding filamentary tape. The isotropic core 40, having a handle end 41 and a head end 42, is wrapped by a reinforced fiber/resin tape 43 whose major fibers 44 are unidirectional filaments spirally wound at an oblique angle e with respect to the axis 9 of the shaft. Minor fibers 45 represent 0°, 90°, and other cross direction tapes which are much less important in its torsional rigidity.

Fig. 4 illustrates an important feature of the unidirectional, spirally wound, filamentary tape 43 in relation to the torsional rigidity of the shaft in which the fibered tape is a component. When a clockwise torque is applied at the head end 42 of the shaft, the twist of the shaft will stretch the clockwise fibers 44 in tape element 43 and compress the resin between the parallel fibers. Consequently, the gap between fibers tends to be reduced, resins in between tend to be squeezed, the diameter of the filament sleeve tends to decrease and it soon becomes increasingly difficult to twist the shaft in the clockwise direction after a small amount of initial rotation. Since the metal tube 40 is isotropic, a twist does not change its torsional rigidity. Increase of the rigidity of the shaft is contributed entirely by the unidirectional spiral filamentary element 43. This feature of nonlinearity of torsional rigidity: fast increasing torsional rigidity along the fiber spiral orientation and the opposite, fast decreasing torsional rigidity at the opposite orientation which unwinds the spiral fiber, is due to the fiber tapes' unidirectional winding. The pretwist imposed on the filamentary sleeve 43 along the direction of fiber orientation hastens the initial rotation the shaft would make to reach to the region of nonlinearity of torsional rigidity from the filamentary sleeve element.

It is to be noted that an obliquely inclined fiber is not to be confused with a fiber twisted by a twisting torque. The former is a way in arranging the direction of filaments. The fiber is laid over the surface in a stress free manner with an oblique angle of inclination. Pretwist, however, is different. It twists a hardened, spirally wound finished filamentary tube by applying torque at both ends. Having twisted, the inclination angle of its fibers is increased or decreased due to the rotation. Torsional rigidity is then no longer constant, it changes with the changed fiber/resin geometry.

In a prior art, U. S. patent No. 5,259,614, Greer suggested to pretwist the metal core of a golf shaft along the rotation direction the golf shaft will turn when the head hits a ball. The pretwist of the metal tube is sustained by a composite outer sleeve of the shaft which has spiral winding tapes of fiber/resin material, having alternately equal but opposite inclined fibers, forming a seamless jacket over the core. The sleeve is rotationally isotropic and has no orientation preference of rigidity. After balancing the pretwist of the core tube, the sleeve is being twisted to the opposite direction and the twist of the core tube is reduced. Greer thought the shaft has already had a built-in twist and therefore a subsequent impact on the head will not cause as much rotation to the shaft as if the core is not pretwisted. Greer's reasoning has no theoretical basis. Theory indicated that the pretwist of his core is balanced by the induced opposite twist to the composite outer sleeve. Further additional torque to the head by impact will merely create a second balanced stress system which is independent of the first balanced stress system. This independency is called "principle of superposition" in mechanics. A pretwist of an isotropic system, a metal core plus a symmetric taped sleeve, can not affect the torsional rigidity of the shaft.

### PREFERRED EMBODIMENTS OF THE INVENTION

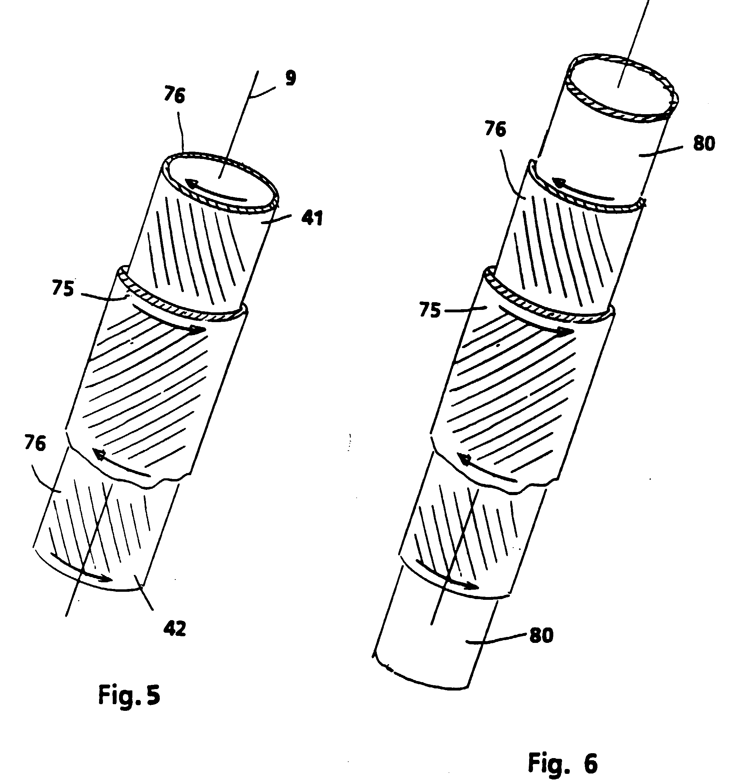

Fig. 5 shows a preferred embodiment, wherein a composite shaft is shown having a handle end 41 and a head end 42, comprising a central tube 76 and an adjacent tube 75. Both component tubes comprising, at least for a part of its length, reinforcing fiber/resin filament windings, whose major fibers are unidirectional, obliquely oriented. A tube element like 75 or 76 may be taken generally as composed of filament layers of different inclination angles, may even include thin walled metal tubes, but its major fibers are unidirectional spirals, making the tube strongly anisotropic. Tubes 75 and 76 are preferred to have substantially equal torsional rigidity characteristics, but their orientation of anisotropicity should be opposite. The two tubes, are manufactured separately before assembly. The assembly is characterized by pretwisting the tubes along their respective direction of greater torsional rigidity and held in that prestressed state by a clamping device prior to and during their bonding together as a single shaft. Bonding may be done by conventional means, for example by epoxy or other industrial adhesive agents. The two tubes are tightly bonded at their contact surface. The clamping device is removed after the bonding becomes permanent.

The angle of pretwist for the tubes should be large enough that the resin between parallel adjacent fibers is compressed solid, figuratively speaking. Since each tube tends to twist back to its untwisted state but is prevented to do so by the adjacent, oppositely pretwisted tube bonded to it. This is an enabling feature of the invention. The shaft now becomes very torsionally rigid, or said as being anti-twist, in either orientation direction: further counterclockwise rotation is stopped by tube 76 and further clockwise rotation is stopped by tube 75.

Utilization of this feature of non-linear rotational rigidity of a spiral, unidirectional, filamentary fiber/resin tape and the method of suitable pretwisting to take advantage of the anisotropicity is an innovative idea. Other anisotropic reinforced elastomers, like rubber/glass, also exhibit such property.

Fig. 6 shows another preferred embodiment of a three-tube composite shaft where the third tube 80 is neutral in torsional rigidity, such as a metal tube. Fiber orientation of the two oppositely winding composite tubes are the same as in Fig. 5. The two anisotropic fiber/resin tubes should be made separately and hardened. They are then held in the opposite pretwisted state prior to and during the time the third tube is joined to them without prestress; and the three are joined together permanently. The third isotropic tube may become the core, may be placed in the middle or outside.

The following observations seemed appropriate.

The shaft with improved torsional rigidity may be made as an article, a shelf item for golf clubs. A suitable head may be installed to the shaft later.

The shaft with anti-twist behavior may be used in other industrial applications other than sports equipment. The shaft itself may be straight or flexible in bending. A drive shaft having anti-torsional properties of this type, may find applications in engineering such as flexible shafts transmitting torque, or used in a robot to actuate movement of an arm, etc.

Blending of filamentary reinforcing fiber/resin tapes of various fiber orientations, handling of pretwist equipments and making shafts should be familiar to people in the trade. Methods pertaining to manufacture said tubular elements and forming of shafts have been described in the specification. Minor changes in details of the invention which fall within the principles of the invention is deemed as within the scope of the appended claims.

## Claims

1. An article of manufacture comprising a shaft, the shaft including a first tubular element (75) which is torsionally rigid, rotationally anisotropic along at least a portion of its length and is maintained in a twisted condition in the direction of greater torsional rigidity, thereby defining a first twisted segment, and the shaft further including a second tubular element (76), adjacent and generally coaxial to said first tubular element, which is torsionally rigid, rotationally anisotropic along at least a portion of its length and is maintained in a twisted condition, thereby defining a second twisted segment, wherein the twist of the second twisted segment is along its direction of greater torsional rigidity which is the direction opposite to the twist of said first twisted segment.

2. An article of manufacture as defined in claim 1 wherein said first and second twisted segments having opposed contact surfaces and the opposite twists of said first (75) and second (76) twisted segments are maintained by means through said contact surfaces therebetween.

3. An article of manufacture as defined in claim 1 wherein said first and second rotationally anisotropic tubular elements are characterised by having nonlinear torsional rigidity which when twisted along the orientation of greater torsional rigidity the required torque increases exponentially with the angle of twist.

4. An article of manufacture as defined in claim 1 wherein said first (75) and second (76) tubular elements are rotationally anisotropic, reinforced fiber/resin composite tubes whose major fibers are unidirectional, spiral wound, obliquely inclined with respect to the axis of the shaft.

5. An article of manufacture as defined in claim 1 wherein said shaft further comprises a third tubular element, which is a rotationally isotropic tube (80), generally coaxial to said first and second tubular elements.

6. An article of manufacture as defined in claim 1 wherein said first (75) and second (76) tubular elements are being of separate manufacture and are subsequently pretwisted oppositely along their respective orientation of greater torsional rigidity and are held in said pretwisted state prior to and during being joined to each other in the formation of the shaft.

7. An article of manufacture as defined in claim 5 wherein said three tubular elements (75. 76, 80) are of separate manufacture and said first (75) and second (76) tubular elements are subsequently pretwisted oppositely along their respective orientation of greater torsional rigidity and are held in that prestressed state prior to and during being joined to each other and to said third tubular element (80) in the formation of the shaft.

8. An article of manufacture as claimed in any of claims 1 to 7 in which said article is an article of sports equipment

9. An article of sports equipment as defined in claim 8 in the form of a golf club.
